# DEMANDE DE BREVET EUROPEEN

(11) **EP 0 555 121 A1**
(43) Date de publication de la demande: **11.08.1993**
(21) Numéro de dépôt: 93400174.4
(22) Date de dépôt: 26.01.1993
(51) Int. Cl.: B64C 25/18

(54) **Train d'atterrissage relevable équipé d'une contre-fiche articulée à double alignement**

(30) Priorité: 03.02.1992 FR 9201161
(71) Demandeur: MESSIER BUGATTI, F-78140 Velizy Villacoublay (FR)
(72) Inventeur: Derrien, Michel, F-78000 Versailles (FR)
(74) Mandataire: Jaunez, Xavier

(57) **Abrégé**

L'invention concerne un train d'atterrissage relevable comportant un caisson d'amortisseur et une tige coulissante, ainsi qu'une contre-fiche articulée à double alignement.

Conformément à l'invention, il est prévu un moyen de déverrouillage (240) pour briser l'alignement secondaire (231) et par suite l'alignement principal (221) lors du relevage du train, ledit moyen étant essentiellement constitué par un levier (250) monté tournant sur un bras (222) de l'alignement principal, et par un ensemble moto-réducteur (252) entraînant en rotation ce levier tournant qui comporte en outre un bras de déverrouillage coopérant, lors de l'actionnement dudit ensemble moto-réducteur avec le bras inférieur (233) de l'alignement secondaire (231) pour briser cet alignement secondaire. Des moyens de rappel (258) sont en outre associés au levier tournant (250) pour assurer le retour de celui-ci à sa position initiale lorsque le train est relevé.

## Description

L'invention concerne les trains d'atterrissage d'avions, et plus spécialement les trains relevables équipés d'une contre-fiche articulée à double alignement.

On connaît déjà des trains d'atterrissage relevables, du type comportant un caisson d'amortisseur articulé sur une structure d'avion, dont la tige coulissante porte un train de roues, et une contre-fiche articulée à double alignement, avec un alignement principal reliant le caissons d'amortisseur à la structure d'avion, en étant formé d'un bras supérieur et d'un bras inférieur articulés entre eux, et un alignement secondaire reliant un bras de l'alignement principal à ladite structure d'avion, en étant également formé d'un bras supérieur et d'un bras inférieur articulés entre eux, un moyen de déverrouillage étant en outre prévu pour briser l'alignement secondaire et par suite l'alignement principal lors du relevage du train.

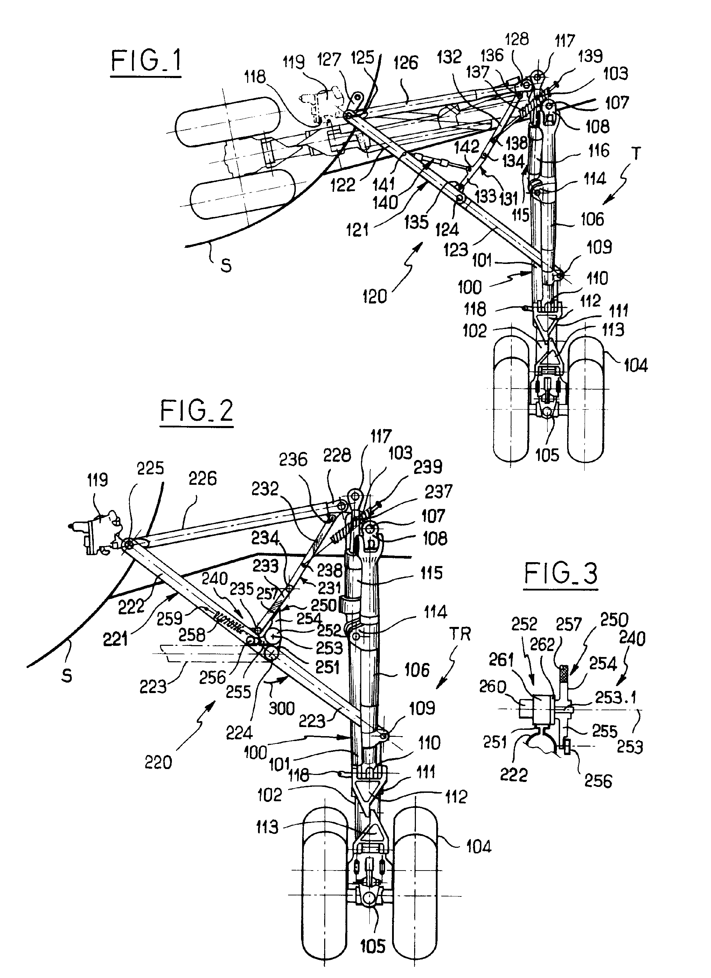

Afin de mieux faire comprendre l'agencement d'un tel train, et les problèmes que l'on peut rencontrer avec le moyen de déverrouillage utilisé, on a illustré sur la figure 1 du dessin annexé un train d'atterrissage relevable connu du type précité, ce train étant représenté en position train bas afin de mieux distinguer les organes qui le constituent, et en particulier la contre-fiche articulée à double alignement (la position train haut est également schématisée pour compléter la représentation).

La figure 1 permet ainsi de distinguer un train d'atterrissage relevable T, dont l'amortisseur 100 est constitué par un caisson d'amortisseur 101, et une tige 102 coulissant dans ledit caisson, coaxialement à celui-ci. Le caisson d'amortisseur 101 est articulé supérieurement (en 103) sur la structure S de l'avion, l'axe d'articulation passant par l'extrémité d'une branche de liaison 107 solidaire dudit caisson. Un élément de contreventement 106 est associé à l'amortisseur 100, ledit élément étant d'une part relié, par une articulation tournante 108, à l'extrémité de la branche de liaison 107, et d'autre part articulé en 109 sur une appendice inférieur du caisson d'amortisseur 101. L'élément de contreventement 106 est en outre articulé, au niveau de son extrémité inférieure 110, sur un manchon tournant 111 qui est relié, par un compas dont on distingue les deux bras 112 et 113, au châssis 105 d'un train de roues 104 articulé prévu en extrémité inférieure de la tige coulissante 102. Un vérin de manoeuvre 115 assure le relevage ou la descente du train d'atterrissage T, le corps 116 de ce vérin 115 étant articulé sur un appendice médian 114 de l'élément de contreventement 106, tandis que la tige dudit vérin est articulée par son extrémité 117 sur la structure d'avion. On distingue également un galet 118 agencé en extrémité d'un appendice prévu en partie basse du caisson, ledit galet coopérant, lorsque le train est relevé, avec le crochet d'un boîtier d'accrochage 119 logé dans la structure d'avion.

Le train d'atterrissage T est en outre équipé d'une cotre-fiche articulée 120 qui est à double alignement. La position train bas illustrée sur la figure 1 permet de bien distinguer les organes constitutifs de cette contre-fiche articulée, et en particulier son alignement principal 121 et son alignement secondaire 131.

L'alignement principal 121 relie le caisson d'amortisseur 101 (au niveau d'une articulation 125 qui est en outre associée à deux bielles de liaison 126, 127), et il est formé d'un bras supérieur 122 et d'un bras inférieur 123 articulés entre eux au niveau d'une articulation 124. L'alignement secondaire 131 relie quant à lui un bras, ici le bras supérieur 122, de l'alignement principal 121 (au niveau d'une articulation 135) à la structure d'avion (au niveau d'une articulation 136 associée à une extrémité 128 de la bielle fixe 126 précitée), et il est aussi formé d'un bras supérieur 132 et d'un bras inférieur 133 articulés entre eux au niveau d'une articulation 134.

Un moyen de déverrouillage 140 est en outre prévu pour briser l'alignement secondaire et par suite l'alignement principal lors du relevage du train. Comme illustré ici, ce moyen de déverrouillage 140 est habituellement réalisé sous la forme d'un petit vérin dont le corps est ici articulé en 141 sur le bras supérieur 122 de l'alignement principal 121, et la tige en 142 sur le bras inférieur 133 de l'alignement secondaire 131.

Lorsque le vérin de manoeuvre 115 est actionné pour la descente du train, le petit vérin 140 associé à la conte-fiche 120 suit le mouvement de déploiement des deux alignements 121 et 131, ce mouvement étant d'ailleurs en général assisté par la présence de deux ressorts de traction 137 reliant le bras supérieur 132 de l'alignement secondaire 131 (en 138) à la structure d'avion (en 139). Par contre,lors du relevage, le petit vérin 140 associé à la contre-fiche 120 intervient de manière active pour briser (par rentrée de sa tige) l'alignement secondaire 131 à l'encontre des ressorts de rappel 137, et par suite briser l'alignement principal 121, pour permettre l'action normale du vérin de manoeuvre 115.

Un tel système est couramment utilisé, mais présente cependant un inconvénient inhérent à l'utilisation d'un petit vérin comme moyen de déverrouillage servant à briser le double alignement de la contre-fiche articulée. En effet, on ne peut totalement écarter le risque de blocage du verrouillage, le grippage du petit vérin pouvant apparaître à la commande du relevage du train (ce vérin est en effet suiveur lors de la descente du train).

L'invention vise précisément à résoudre ce problème technique, en concevant un train d'atterrissage relevable du type précité, dont le déverrouillage peut être obtenu de manière plus fiable qu'avec le petit vérin des trains d'atterrissage connus.

L'invention a ainsi pour objet de réaliser un train d'atterrissage relevable dont la structure permet d'assurer aisément la fonction de déverrouillage pour briser le double alignement de la contre-fiche et à autoriser le relevage normal du train, sans risque d'opposition à la descente ultérieure dudit train.

Il s'agit plus particulièrement d'un train d'atterrissage relevable, comportant un caisson d'amortisseur articulé sur une structure d'avion, dont la tige coulissante porte un train de roues, et une contre-fiche articulée à double alignement, avec un alignement principal reliant le caisson d'amortisseur à la structure d'avion, en étant formé d'un bras supérieur et d'un bras inférieur articulés entre eux, et un alignement secondaire reliant un bras de l'alignement principal à ladite structure d'avion, en étant également formé d'un bras supérieur et d'un bras inférieur articulés entre eux, un moyen de déverrouillage étant en outre prévu pour briser l'alignement secondaire et par suite l'alignement principal lors du relevage du train, caractérisé par le fait que le moyen de déverrouillage est essentiellement constitué par un levier monté tournant sur le bras de l'alignement principal sur lequel s'articule l'alignement secondaire, et par un ensemble moto-réducteur entraînant en rotation ce levier tournant, ledit levier comportant un bras de déverrouillage coopérant, lors de l'actionnement dudit ensemble moto-réducteur, avec le bras inférieur de l'alignement secondaire pour briser ledit alignement secondaire, des moyens de rappel étant en outre associés audit levier tournant pour assurer le retour de celui-ci à sa position initiale lorsque le train est relevé.

De préférence, le levier tournant est monté sur le bras supérieur de l'alignement principal, entre l'articulation reliant ledit bras au bras inférieur de l'alignement secondaire et l'articulation reliant les deux bras de l'alignement principal, et présente un bras de rappel avec lequel coopèrent les moyens de rappel associés audit levier tournant.

Avantageusement alors, les moyens de rappel associés au levier tournant comportent un ressort de traction reliant le bras de rappel dudit levier à un point du bras supérieur de l'alignement principal. Il est en outre intéressant que le bras de rappel du levier tournant présente un galet d'extrémité, et soit agencé de telle façon que le bras inférieur de l'alignement principal contacte ledit galet d'extrémité lors du relevage du train, et garantisse ainsi le retour dudit levier tournant à sa position initiale lorsque le train est relevé.

Conformément à un mode d'exécution particulier, le levier tournant est en forme d'équerre, et présente des bras de déverrouillage et de rappel qui sont sensiblement de même longueur, ce qui favorise la compacité du moyen de déverrouillage.

Il est par ailleurs avantageux que l'ensemble moto-réducteur soit équipé d'un limiteur de couple agencé entre le réducteur dudit ensemble et le levier tournant. De préférence alors, le limiteur de couple est à friction, et est taré à une valeur dépassant l'action du ou des ressorts de verrouillage associés à la contre-fiche articulée.

D'autres caractéristiques et avantages de l'invention apparaîtront plus clairement à la lumière de la description qui va suivre et du dessin annexé, concernant un mode de réalisation particulier, en référence aux figures 2 et 3 où:
- la figure 2 illustre un train d'atterrissage conforme à l'invention, représenté en position train bas ;
- la figure 3 est une vue partielle de profil permettant de distinguer l'ensemble moto-réducteur associé au levier tournant (d'autres agencements pouvant naturellement être envisagés, ainsi que cela sera expliqué plus loin).

Le train d'atterrissage TR illustré en figure 2 comporte un certain nombre de composants identiques à ceux du train d'atterrissage T illustré en figure 1. On donc conservé pour ces composants identiques les mêmes références, et lesdits composants ne feront donc pas l'objet d'une nouvelle description.

Le train d'atterrissage TR conforme à l'invention se démarque essentiellement du train d'atterrissage connu T par la structure de sa contre-fiche à double alignement, et plus précisément par la structure des moyens de déverrouillage prévus pour briser l'alignement secondaire de cette contre-fiche articulée et par suite l'alignement principal de ladite contre-fiche lors du relevage du train.

La contre-fiche articulée 220 comporte, comme la contre-fiche précédemment décrite, un alignement principal 221 reniant le caisson d'amortisseur 101 (au niveau de son articulation 109 déjà mentionnée) à la structure d'avion S (au niveau d'une articulation 225 qui est en outre associée à une bielle de liaison 226), et il est formé d'un bras supérieur 222 et d'un bras inférieur 223 articulés entre-eux au niveau d'une articulation 224. L'alignement secondaire 231 relie quant à lui un bras, ici le bras supérieur 222, de l'alignement principal 221 (au niveau d'une articulation 235) à la structure d'avion (au niveau d'une articulation 236 associée à une extrémité 228 de la bielle fixe 226 précitée), et il est aussi formé d'un bras supérieur 232 et d'un bras inférieur 233 articulés entre eux au niveau d'une articulation 234. Comme précédemment, au moins un ressort de traction 237 est prévu, reliant le bras supérieur 232 de l'alignement secondaire 231 (en 238) à la structure d'avion (en 239), afin d'exercer un couple de rappel pour l'alignement secondaire 231 dans le sens du déploiement de celui-ci.

On observera que les composants précités de la contre-fiche 220 ont été affectés des mêmes références mais augmentées de 100 par rapport aux composants homologues de la contre-fiche 120 du train d'atterrissage T illustré en figure 1.

Un moyen de déverrouillage 240 est en outre prévu pour briser l'alignement secondaire 231, et par suite l'alignement principal 221, lors du relevage du train TR.

Conformément à un aspect essentiel de l'invention, le moyen de déverrouillage 240 est essentiellement constitué par un levier 250 monté tournant sur le bras de l'alignement principal 221 sur lequel s'articule l'alignement secondaire 231, c'est-à-dire en l'espèce le bras supérieur 222, et par un ensemble moto-réducteur 252 entraînant en rotation ce levier tournant. Le levier tournant 250 comporte fondamentalement un bras de déverrouillage 254 coopérant, lors de l'actionnement de l'ensemble moto-réducteur 252, avec le bras inférieur 233 de l'alignement secondaire 231 pour briser ledit alignement secondaire.

Le levier tournant 250 est ici monté entre l'articulation 235 reliant le bras supérieur 222 de l'alignement principal 221 au bras inférieur 233 de l'alignement secondaire 231, et l'articulation 224 entre les deux bras 222, 223 de l'alignement principal 221. Le levier tournant 250 agit ainsi comme un levier-pousseur, par l'extrémité libre 257 de son bras de déverrouillage 254. Ainsi, l'axe d'articulation, noté 253, du levier tournant 250, se trouve situé entre les axes des articulations 235 et 224 précités. On pourrait en variante agencer le levier tournant 250 de l'autre côté de l'articulation 235, le bras de déverrouillage 254 exerçant alors une traction sur le bras 233 pour briser l'alignement secondaire 231. Le mode d'exécution illustré apparait cependant plus avantageux, dans la mesure où il évite toute liaison de couplage entre le bras de déverrouillage du levier tournant et le bras inférieur de l'alignement secondaire. Il apparaît dès lors indispensable de prévoir en outre des moyens de rappel associés au levier tournant 250, afin d'assurer le retour de celui-ci à sa position initiale lorsque le train est relevé. On pourrait prévoir un élément ressort reliant le bras de déverrouillage 254 du levier tournant 250 à l'un des deux bras de l'alignement principal. Il est cependant avantageux d'agencer le levier tournant 250 de telle façon qu'il présente également un bras de rappel 255 avec lequel coopèrent les moyens de rappel associés au levier tournant 250. Le levier tournant 250 est ici en forme d'équerre, et présente des bras de déverrouillage 254 et de rappel 255 qui sont sensiblement de même longueur. Il est alors aisé de prévoir un ressort de traction 258 reliant le bras de rappel 255 du levier tournant 250 à un point 259 du bras supérieur 222 de l'alignement principal 221.

L'ensemble fonctionnel associé au levier tournant 250 est ici monté par des pattes 251 sur le bras supérieur 222 de l'alignement principal 221, au voisinage de l'articulation 224 entre les deux bras de cet alignement principal. On pourra naturellement prévoir, dans la pratique, de réaliser l'extrémité concernée du bras supérieur 222 sous la forme d'une fourche entre les deux branches de laquelle peut librement évoluer le bras de rappel 255 du levier tournant 250, ce qui permet d'obtenir une structure particulièrement compacte de cet ensemble fonctionnel.

Lorsqu'il s'agit de relever le train d'atterrissage, il suffit alors d'actionner l'ensemble moto-réducteur 252 associé au levier tournant 250 pour provoquer la rotation de levier tournant dans le sens indiqué par la flèche 300, ce qui produit instantanément une action permettant de briser l'alignement secondaire 231 , et par suite de briser l'alignement principal 221 de la contre-fiche articulée 220. Lorsque le train est relevé, le retour du levier tournant 250 à sa position initiale est assuré par le ressort 258, de sorte que ce levier tournant ne vient en aucune façon s'opposer à un nouveau déploiement de la contre-fiche à double articulation, et par suite à la descente du train d'atterrissage.

Il est cependant avantageux de prévoir une sécurité supplémentaire garantissant le retour du levier tournant à sa position initiale lorsque le train est relevé. Un moyen simple illustré ici consiste à faire intervenir le bras inférieur 223 de l'alignement principal 221 de telle façon que ce bras agisse lui-même sur le levier tournant 250, lors du relevage du train, dans le cas où le ressort de rappel 258 n'aurait pas assuré correctement sa fonction (ce pourrait être le cas d'un point dur ou d'une rupture de dents intervenant dans l'ensemble moto-réducteur associé au levier tournant 250). On a ici prévu à cet effet que le bras de rappel 255 du levier de tournant 250 présente un galet d'extrémité 256, qui est agencé de telle façon que le bras inférieur 223 contacte ledit galet d'extrémité lors du relevage du train, et garantisse ainsi le retourdu levier tournant à sa position initiale lorsque le train est relevé : la position relative correspondante de ce bras inférieur 223 est illustrée en traits mixtes sur la figure 2 pour illustrer cette coopération. Si l'extrémité concernée du bras supérieur 222 de l'alignement principal 221 est réalisée sous la forme d'une fourche, comme cela a été indiqué plus haut, le bras de rappel 255 et le galet d'extrémité 256 qui lui est associé peuvent alors être disposés au niveau du plan médian de l'alignement principal, de sorte que l'action du bras inférieur 223 comme moyen de sécurité supplémentaire pour assurer le rappel du levier tournant 250 se trouve de facto facilitée.

La vue partielle de profil de la figure 3 permet de distinguer un agencement possible de l'ensemble moto-réducteur 252 associé au levier tournant 250. L'ensemble moto-réducteur 252 comporte ainsi un moteur 260, qui est de préférence un moteur électrique asynchrone sans balais, en aval duquel est prévu un réducteur 261 à un ou plusieurs étages. De préférence en outre, l'ensemble moto-réducteur 252 est équipé d'un limiteur de couple 262 agencé entre le réducteur 261 dudit ensemble et le levier d'ensemble 250, ledit levier tournant étant alors solidaire en rotation de l'arbre de sortie 253.1 associé à ce limiteur de couple 262. Il est alors avantageux que le limiteur de couple 262 soit du type à friction, et soit taré à une valeur dépassant l'action du ou des ressorts de verrouillage 237 et 258 associés à la contre-fiche articulée 220. Ce limiteur de couple est donc un système passif, "transparent" en fonctionnement normal, intervenant seulement en cas de point dur sous l'action directe du bras inférieur de l'alignement principal.La présence d'un tel limiteur de couple permet ainsi d'être tout à fait certain que le levier tournant ne peut faire opposition au déploiement normal de la contre-fiche articulée à double alignement, et donc à la descente du train d'atterrissage.

On est ainsi parvenu à réaliser un train d'atterrissage relevable dont la structure permet d'assurer aisément, et avec une fiabilité optimale, la fonction de déverrouillage pour briser le double alignement de la contre-fiche, et par suite permettre le relevage normal du train, et ce sans risque d'opposition à une descente ultérieure dudit train.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Train d'atterrissage relevable, comportant un caisson d'amortisseur articulé sur une structure d'avion, dont la tige coulissante porte un train de roues, et une contre-fiche articulée à double alignement, avec un alignement principal reliant le caisson d'amortisseur à la structure d'avion, en étant formé d'un bras supérieur et d'un bras inférieur articulés entre eux, et un alignement secondaire reliant un bras de l'alignement principal à ladite structure d'avion, en étant également formé d'un bras supérieur et d'un bras inférieur articulés entre eux, un moyen de déverrouillage étant en outre prévu pour briser l'alignement secondaire et par suite l'alignement principal lors du relevage du train, caractérisé par le fait que le moyen de déverrouillage (240) est essentiellement constitué par un levier (250) monté tournant sur le bras (222) de l'alignement principal (221) sur lequel s'articule l'alignement secondaire (231), et par un ensemble moto-réducteur (252) entraînant en rotation ce levier tournant, ledit levier comportant un bras de déverrouillage (254) coopérant, lors de l'actionnement dudit ensemble moto-réducteur, avec le bras inférieur (233) de l'alignement secondaire (231) pour briser ledit alignement secondaire, des moyens de rappel (258 ; 223) étant en outre associés audit levier tournant pour assurer le retour de celui-ci à sa position initiale lorsque le train est relevé.

2. Train d'atterrissage selon la revendication 1, caractérisé par le fait que le levier tournant (250) est monté sur le bras supérieur (222) de l'alignement principal (221), entre l'articulation (235) reliant ledit bras au bras inférieur (233) de l'alignement secondaire (231) et l'articulation (224) reliant les deux bras (222, 223) de l'alignement principal (221), et présente un bras de rappel (255) avec lequel coopèrent les moyens de rappel (258; 223) associés audit levier tournant.

3. Train d'atterrissage selon la revendication 2, caractérisé par le fait que les moyens de rappel associés au levier tournant (250) comportent un ressort de traction (258) reliant le bras de rappel (255) dudit levier à un point (259) du bras supérieur (222) de l'alignement principal (221).

4. Train d'atterrissage selon la revendication 2 ou 3, caractérisé par le fait que le bras de rappel (255) du levier tournant (250) présente un galet d'extrémité (256), et est agencé de telle façon que le bras inférieur (223) de l'alignement principal (221) contacte ledit galet d'extrémité lors du relevage du train, et garantisse ainsi le retour dudit levier tournant à sa position initiale lorsque le train est relevé.

5. Train d'atterrissage selon l'une des revendications 2 à 4, caractérisé par le fait que le levier tournant (250) est en forme d'équerre, et présente des bras de déverrouillage (254) et de rappel (255) qui sont sensiblement de même longueur.

6. Train d'atterrissage selon l'une des revendications 1 à 5, caractérisé par le fait que l'ensemble moto-réducteur (252) est équipé d'un limiteur de couple (262) agencé entre le réducteur (261) dudit ensemble et le levier tournant (250).

7. Train d'atterrissage selon la revendication 6, caractérisé par le fait que le limiteur de couple (262) est à friction, et est taré à une valeur dépassant l'action du ou des ressorts de verrouillage (237, 258) associés à la contre-fiche articulée (220).
